# EUROPÄISCHE PATENTANMELDUNG

(11) **EP 1 607 279 A1**
(43) Veröffentlichungstag der Anmeldung: **21.12.2005**
(21) Anmeldenummer: 05012212.6
(22) Anmeldetag: 07.06.2005
(51) Int. Cl.: B60R 21/20, B60R 21/16

(54) **Schutzvorrichtung für den Fahrer eines Kraftfahrzeugs**

(30) Priorität: 15.06.2004 DE 202004009450 U
(71) Anmelder: TRW Automotive Safety Systems GmbH, 63743 Aschaffenburg (DE)
(72) Erfinder: Helmstetter, Matthias, 63743 Aschaffenburg (DE)
(74) Vertreter: Strass, Jürgen

(57) **Zusammenfassung**

Eine Schutzvorrichtung für den Fahrer eines Kraftfahrzeugs umfaßt ein Airbagmodul (16), das einen aufblasbaren Airbag (24) aufweist. Das Airbagmodul (16) ist hinter der Instrumententafel (12) des Fahrzeugs angeordnet. Der Airbag (24) erstreckt sich im aufgeblasenen Zustand in einem Raum, der im wesentlichen durch die Fahrertür (26), die A-Säule (28) und das Lenkrad (10) des Fahrzeugs begrenzt ist.

## Beschreibung

Die Erfindung betrifft eine Schutzvorrichtung für den Fahrer eines Kraftfahrzeugs, mit einem Airbagmodul, das einen aufblasbaren Airbag aufweist.

In nahezu jedem modernen Fahrzeug ist eine Schutzvorrichtung für den Fahrer mit einem im Fahrzeuglenkrad untergebrachten Airbagmodul vorgesehen. Der sich aus dem Lenkrad heraus entfaltende Airbag schützt den Fahrer insbesondere bei einem Frontalaufprall. Zusätzlichen Schutz bei einem seitlichen oder schrägen Aufprall bieten z. B. sogenannte "Window-Bags", die sich vom Dachbereich des Fahrzeugs über die Seitenfenster nach unten entfalten, bzw. Airbags, die sich direkt aus der A-Säule heraus entfalten. Window-Bags gehören aber nicht unbedingt zur Standardausstattung eines Fahrzeugs oder können bei bestimmten Fahrzeugtypen, insbesondere bei Cabrios, gar nicht eingebaut werden. Die Funktion von Airbags, die in die A-Säule integriert sind, hängt stark von der Fahrzeuggeometrie, insbesondere von der Neigung der A-Säule, und vom zur Verfügung stehenden Bauraum in der A-Säule ab.

Aufgabe der Erfindung ist es daher, eine effiziente zusätzliche Schutzmaßnahme für den Fahrer, insbesondere bei einem seitlichen oder schrägen Aufprall, zu schaffen, die unabhängig vom Fahrzeugtyp realisierbar ist.

Zur Lösung dieser Aufgabe wird eine Schutzvorrichtung der eingangs genannten Art vorgeschlagen, bei der das Airbagmodul hinter der Instrumententafel des Fahrzeugs angeordnet ist und bei der sich der Airbag im aufgeblasenen Zustand in einem Raum erstreckt, der im wesentlichen durch die Fahrertür, die A-Säule und das Lenkrad des Fahrzeugs begrenzt ist. Die erfindungsgemäße Schutzvorrichtung läßt sich in jeden Fahrzeugtyp einbauen und an die Gegebenheiten des Innenraums anpassen. Sie bietet einen wirksamen ergänzenden Schutz für den Fahrer, indem der Bereich zwischen Fahrertür, A-Säule und Lenkrad mit einem Airbag ausgefüllt wird. Der hinter der Instrumententafel zwischen der Fahrertür und dem Lenkrad zur Verfügung stehende Bauraum wird somit optimal genutzt.

Gemäß einer Weiterbildung der Erfindung nimmt der Airbag im aufgeblasenen Zustand eine Position ein, in der der Airbag einen aus dem Lenkrad des Fahrzeugs ausgetretenen Lenkradairbag abstützt. Dadurch kann die Funktion des Lenkradairbags, insbesondere bei einem Schrägaufprall, deutlich verbessert werden, da der Lenkradairbag bei einem dezentralen Eintauchen des Fahrers nicht seitlich ausweichen kann. Ein Abrutschen des Fahrers vom Lenkradairbag wird somit vermieden.

Weitere Merkmale und Vorteile der Erfindung ergeben sich aus der nachfolgenden Beschreibung eines Ausführungsbeispiels und aus den beigefügten Zeichnungen, auf die Bezug genommen wird. In den Zeichnungen zeigen:
- Figur 1 den Innenraum eines Fahrzeugs mit einer erfindungsgemäßen Schutzvorrichtung aus Sicht des Fahrers; und
- Figur 2 den Innenraum bei aktivierter Schutzvorrichtung.

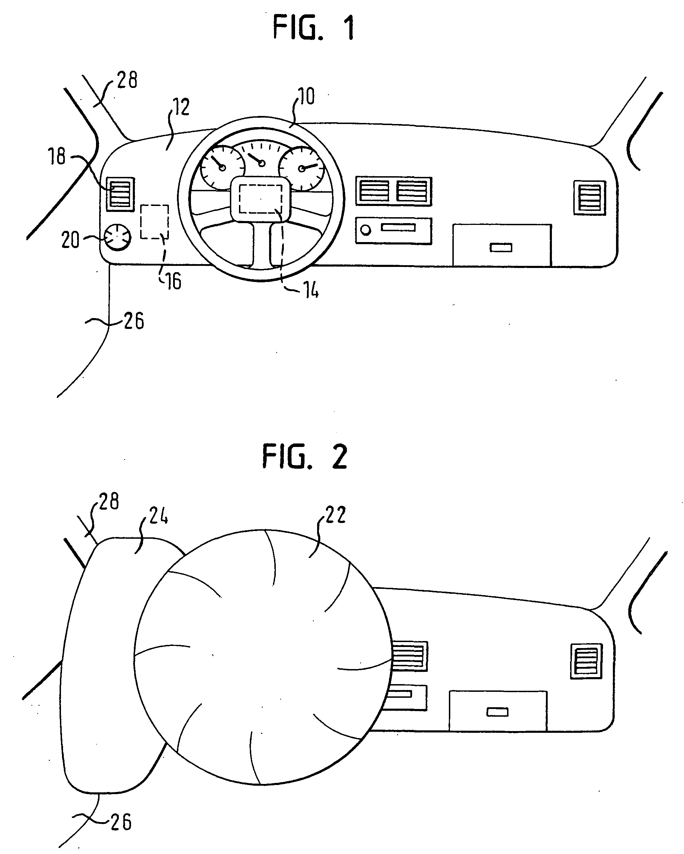

In Figur 1 ist der Innenraum eines Fahrzeugs mit einem Lenkrad 10 und einer Instrumententafel 12 dargestellt. Sowohl im Lenkrad 10 als auch hinter der Instrumententafel 12 sind Airbagmodule 14 bzw. 16 untergebracht. Das Airbagmodul 16 befindet sich in einem Bereich zwischen dem Lenkrad 10 und der Fahrertür 26, genauer gesagt neben einem seitlichen Innenraumbelüfter 18 und einem Lichtschalter 20 des Fahrzeugs, die nahe einem seitlichen Ende der Instrumententafel 12 montiert sind.

Figur 2 zeigt den Innenraum bei aktivierter Schutzvorrichtung. Aus dem Lenkrad 10 hat sich in bekannter Weise ein Lenkradairbag 22 entfaltet. Aus dem hinter der Instrumententafel 12 angeordneten Airbagmodul 16 ist ein zusätzlicher Airbag 24 ausgetreten, der sich im aufgeblasenen Zustand in einem Raum erstreckt, der durch die Fahrertür 26, die A-Säule 28 und das Lenkrad 10 des Fahrzeugs begrenzt ist. Es ist weiterhin zu erkennen, daß der Airbag 24 eine Position einnimmt, in der er den Lenkradairbag 22 abstützt, so daß der Lenkradairbag 22 bei einem Eintauchen des Fahrers eine stabile Position beibehält.

## Patentansprüche

1. Schutzvorrichtung für den Fahrer eines Kraftfahrzeugs, mit einem Airbagmodul (16), das einen aufblasbaren Airbag (24) aufweist, **dadurch gekennzeichnet, daß** das Airbagmodul (16) hinter der Instrumententafel (12) des Fahrzeugs angeordnet ist und daß sich der Airbag (24) im aufgeblasenen Zustand in einem Raum erstreckt, der im wesentlichen durch die Fahrertür (26), die A-Säule (28) und das Lenkrad (10) des Fahrzeugs begrenzt ist.

2. Schutzvorrichtung nach Anspruch 1, **dadurch gekennzeichnet, daß** das Airbagmodul (16) zwischen dem Lenkrad (10) und der Fahrertür (26) untergebracht ist.

3. Schutzvorrichtung nach Anspruch 1 oder 2, **dadurch gekennzeichnet, daß** das Airbagmodul (16) im Bereich eines seitlichen Innenraumbelüfters (18) und/oder eines Lichtschalters (20) des Fahrzeugs untergebracht ist.

4. Schutzvorrichtung nach einem der vorhergehenden Ansprüche, **dadurch gekennzeichnet, daß** der Airbag (24) im aufgeblasenen Zustand eine Position einnimmt, in der der Airbag (24) einen aus dem Lenkrad (10) des Fahrzeugs ausgetretenen Lenkradairbag (22) abstützt.
